# EUROPEAN PATENT APPLICATION

(11) **EP 4 378 898 A1**
(43) Date of publication of application: **05.06.2024**
(21) Application number: 22210881.3
(22) Date of filing: 01.12.2022
(51) Int. Cl.: C02F 1/32, B63J 4/00, A61L 2/10, B60R 15/04, C02F 1/34, C02F 1/36

(54) **A SYSTEM FOR TREATING WASTE WATER FROM A TOILET, A METHOD OF OPERATING THE SYSTEM AND A SHIP**

(71) Applicant: Dynamotion B.V., 8621 CV Heeg (NL)
(72) Inventor: Post, Robert Johannes, 8621 CV Heeg (NL)
(74) Representative: De Vries & Metman

(57) **Abstract**

A system (1) for treating waste water from a toilet comprises a reactor (2) for receiving waste water from a toilet, an agitator for agitating waste water in the reactor (2), a turbidity sensor (8) for measuring turbidity of waste water in the reactor (2), a UVC radiator (10) for radiating waste water in the reactor (2) and a controller (13) for operating the UVC radiator in dependence of a signal received from the turbidity sensor (8). The reactor (2) has an effluent output (5) for emptying the reactor (2).

## Description

The present invention relates to a system for treating waste water from a toilet.

A system for treating waste water from a toilet as such is known in the prior art.

The present invention aims to provide a system for treating waste water which system is particularly suitable for treating waste water discharged from a toilet of a ship. It is undesired to discharge such waste water, which is also called blackwater, directly into the surface water around the ship because of pathogens contained in the waste water.

For this purpose the system according to the invention comprises a reactor for receiving waste water from a toilet, an agitator for agitating waste water in the reactor, a turbidity sensor for measuring turbidity of waste water in the reactor, a UVC radiator for radiating waste water in the reactor and a controller for operating the UVC radiator in dependence of a signal received from the turbidity sensor, wherein the reactor has an effluent output for emptying the reactor.

In practice waste water from a toilet is a liquid that may contain non-solved parts or particles, which reduce clarity of the waste water. Decreasing clarity means increasing turbidity. A high turbidity may be an indication of a relative high concentration of pathogens. In the system according to the invention the pathogens can be destroyed by radiation from the UVC radiator, after which the treated or disinfected waste water can be safely discharged to surface water. An advantage of the system according to the invention is that the operation of the UVC radiator can be adjusted to the level of the turbidity such that the treatment of the waste water can be performed efficiently. For example, a lower turbidity may require a shorter period of UVC radiation. The agitator serves to create a homogeneous liquid in the reactor such that the turbidity sensor can determine a reliable turbidity level and the UVC radiation can be performed effectively.

The turbidity sensor may comprise a TDS meter for detecting total dissolved solids in the liquid in the reactor. Dissolved ionized solids increase the conductivity of a solution and the TDS meter measures the conductivity of the solution and estimates the TDS from that reading.

The reactor may have a circular cylindrical shape. Its centreline may be vertical.

In a preferred embodiment the system is provided with a dilution water supply for supplying dilution water to the reactor, since it provides the opportunity to decrease turbidity such that appropriate conditions for disinfection by UVC radiation are achieved. In this case the liquid in the reactor comprises a mixture of waste water from the toilet and dilution water under operating conditions. The dilution water may be clean water.

The controller may be suitable for controlling dilution water supply to the reactor and may be configured such that it allows dilution water to be supplied to the reactor until the turbidity of the resulting mixture in the reactor as measured by the turbidity sensor has fallen below a predetermined threshold value.

The reactor may have an influent entrance for passing waste water from a toilet into the reactor and a separate dilution water entrance for passing dilution water from the dilution water supply into the reactor.

The system may be provided with an ultrasonic generator for supplying ultrasonic energy to an inner side of the reactor. The ultrasonic generator may pulverize particles in the waste water in order to facilitate the disinfection process of the resulting pieces by the UVC radiator. The ultrasonic generator may also clean surfaces at the inner side of the reactor. Alternative cleaning devices are conceivable, for example a water high-pressure cleaner or a spraying system using a cleaning fluid.

Preferably, the system comprises a cutting device for cutting large parts in the waste water in order to create appropriate conditions for destroying pathogens by the UVC radiator.

The cutting device may be located in the reactor. Alternatively, it may be located upstream of the reactor, for example in the form of a macerator pump downstream a toilet.

The system may be provided with a holding container or a storage container for temporarily collecting waste water before it is transported to a location or a reservoir where the UVC radiator is located. It is conceivable to apply a pre-cutting device in such a holding or storage container in order to pre-treat the waste water. The reservoir where the UVC radiator is located, i.e. where a disinfection reaction takes place, may be located inside the storage container and/or the reservoir may be located such that a liquid automatically flows into the reservoir by gravity if a connection between the reservoir and the storage container is open, for example through a closable valve. The automatic flow by gravity provides the opportunity to omit pumping means, which creates a relatively simple and robust system.

The agitator may be located in the reactor such that it directly contacts the liquid in the reactor under operating conditions.

The agitator may comprise a rotatable member for generating a funnel-shaped vortex in a liquid in the reactor under operating conditions. For example, in case of a circular cylindrical reactor the rotatable member may be rotatable about a centreline thereof. Generally, the funnel-shaped vortex may have a deeper core with increasing rotational speed of the rotatable member.

The system may be provided with a vortex detection system in order to determine whether a vortex exists under operating conditions. The presence of the vortex may be determined on the basis of at least one of the following principles: spectrophotometry for detecting change of colour of the influent due to changing properties of the liquid, measuring light transparency of the liquid, measuring cavitation/vibration, measuring cavitation sound, measuring electric conductivity, measuring pressure, measuring liquid level, measuring sound reflection, measuring IR reflection. Furthermore, if the rotatable member is driven by an electric motor, the electrical current and speed of the electric motor may be measured in order to determine whether a vortex is present. The measured data can also be used to derive the viscosity of the liquid in the reactor such that de UVC radiator may also be operated in dependency of these data.

An additional effect of the rotatable member is that at relatively high rotational speed cavitation vapour bubbles may arise in the liquid in the reactor. The vapour bubbles improve transparency of the liquid which in turn improves efficiency of the UVC radiation. Furthermore, the vapour bubbles may implode such that particles in the liquid may pulverise, hence further improving efficiency of UVC radiation.

The system may be provided with a vacuum device for creating a pressure in the reactor below ambient pressure in order to enhance conditions for generating vapour bubbles in the liquid. Another advantage of the presence of the vacuum device is that it can draw waste water into the reactor, hence omitting a pump which might be sensitive to fouling.

In order to reduce the number of parts of the system the cutting device and the agitator may be integrated.

The system may be provided with an optical spectrometer for determining one or more specific compounds in a liquid in the reactor. An optical spectrometer measures the reflection or absorbance characteristics of a liquid in the reactor, for example of a mixture of waste water and dilution water. The wavelength of radiation may be ultra-violet (uv), visible (vis) and near infra-red (nir). The specific compounds may be certain pathogens, for example Enterococci or E.coli. A signal from the optical spectrometer may be received by the controller which in turn can decide when the UVC radiator may be switched off and the disinfected liquid can be safely discharged.

Alternatively, instead of the optical spectrometer the system may be provided with a sensing device which detects a transfer from infectious to non-infectious liquid. For example, a colour detection device which detects a colour change of the mixture of waste water and dilution water after a period of radiating the mixture. After detecting the colour change the mixture may be safe to empty the reactor to surface water, for example.

It is noted that the above-mentioned optical spectrometer or sensing device may be omitted; instead, the system may be provided with a timer for operating the UVC radiator during a predetermined period of time, depending on determined turbidity. The timer may be controlled by the controller.

In a particular embodiment the UVC radiator is positioned such that it radiates an inner side of a resulting funnel-shaped vortex in a liquid in the reactor when this arises under operating conditions. This appears to radiate the rotating liquid in the reactor efficiently. The UVC radiator may be located above the rotatable member, for example at the axis of rotation of the rotatable member, such that under operating conditions the inner side of the resulting vortex is radiated.

Alternatively, the UVC radiator may extend along a largest portion of the height of a surrounding wall of the reactor. This is also advantageous in combination with a rotatable member that generates a funnel-shaped vortex under operating conditions, since the vortex forces the liquid against the surrounding wall of the reactor such that efficiency of radiation of the passing liquid can be maximized. The UVC radiator may be elongated in vertical direction. The UVC radiator may be mounted to an outer side of the surrounding wall of the reactor where the surrounding wall is transparent, for example. It is also possible to integrated the UVC radiator in the surrounding wall. The UVC radiator may be located at an upper side, a bottom side or side wall of the reactor.

The rotational speed of the rotatable member of the agitator may be variable such that the vortex shape can be varied in order to optimize efficiency of the UVC radiation at different operating conditions.

The invention is also related to a ship including a toilet having a toilet discharge for discharging waste water and a system for treating the waste water as described hereinbefore. In case of the presence of a dilution water supply, this may communicate with a surface water intake of the ship. It is also possible that dilution water is automatically added to the waste water from the toilet when other waste water discharges are connected to the toilet discharge, for example a shower drain.

The invention is also related to a method of operating the system as described above, wherein the reactor is filled with waste water from a toilet, the agitator is operated and turbidity is measured by the turbidity sensor, wherein the controller operates the UVC radiator in dependence of the measured turbidity, after which the reactor is emptied through the effluent output. In case of the presence of a cutting device, the cutting device may be operated as well in order to cut large parts into smaller parts. In case of the presence of an ultrasonic generator, the ultrasonic generator may be operated as well.

In a particular embodiment dilution water is supplied to the reactor until the turbidity has fallen below a predetermined threshold value in order to provide appropriate conditions for treating the mixture of waste water and dilution water by the UVC radiator.

The reactor may be emptied after the concentrations of the one or more specific compounds have fallen below a predetermined threshold.

In an embodiment the agitator is operated such that due to cavitation vapour bubbles arise in the mixture of waste water and dilution water, since the vapour bubbles improve transparency of the mixture which in turn improves efficiency of the UVC radiation. It is possible to increase the concentration of vapour bubbles by generating a vacuum in the reactor. An additional effect of the presence of the vapour bubbles is that implosion of the vapour bubbles results in shock waves which pulverise particles in the waste water such that efficiency of the disinfection process of the resulting pieces by the UVC radiator improves.

The invention will hereafter be elucidated with reference to the schematic drawings showing embodiments of the invention by way of example.
Fig. 1 is a diagram of an embodiment of a system for treating waste water according to the invention.
Fig. 2 is a similar view as Fig. 1, but showing an alternative embodiment.

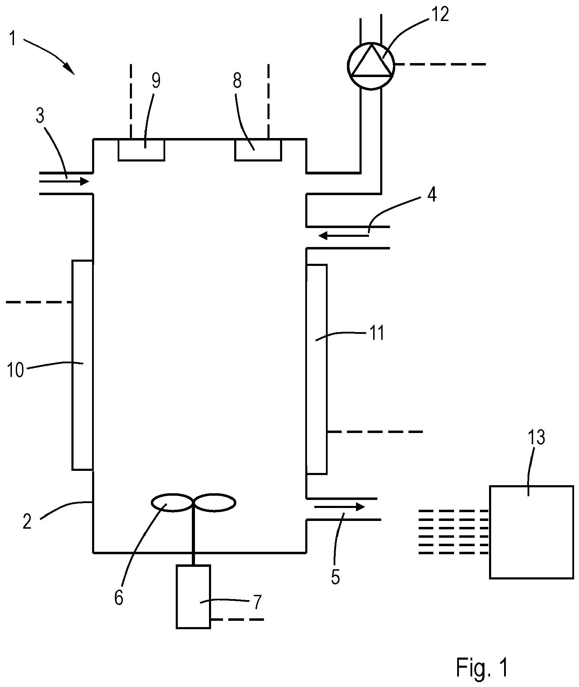

Fig. 1 shows an embodiment of a system 1 for treating waste water. The system 1 is mounted on a ship (not shown) and is configured to disinfect waste water discharged from a toilet before the resulting effluent is discharged to the surface water around the ship. The system 1 is also suitable for other applications than a ship, for example in a stationary building such as a mobile home or in a vehicle such as a motor home. The system 1 comprises a reactor in the form of a reservoir 2 which has an influent entrance 3, a dilution water entrance 4 and an effluent output 5. In this case the reservoir 2 has a circular-cylindrical shape, but alternative shapes are conceivable. The influent entrance 3 communicates with a toilet discharge (not shown) such that waste water from the toilet passes the influent entrance 3 before flowing into the reservoir 2.

There may be a storage container (not shown) between the toilet discharge and the influent entrance 3 for temporarily storing the waste water before introducing it into the reservoir 2. It is also possible to treat and/or cut and/or dilute the waste water in the storage container.

The dilution water entrance 4 may communicate with a surface water intake of the ship. The dilution water can be pumped, or transported by means of gravity, via the dilution water entrance 4 into the reservoir 2. Under operating conditions the reservoir 2 may be filled with a mixture of waste water and dilution water.

In case of the presence of an upstream storage container the reservoir 2 may be located inside the storage container and/or located such that waste water from the toilet in the storage container, possibly supplemented with dilution water, can flow into the reservoir 2 by gravity such that a pump can be omitted. There may be a closable valve between the storage container and the influent entrance 3 of the reservoir 2 in order to allow the reservoir 2 and the storage container to communicate with each other.

Furthermore, the system 1 as shown in Fig. 1 comprises an agitator in the form of a mixing device, which includes a propellor-shaped rotatable member 6 that is driven by an electric motor 7. Primarily, the rotatable member 6 is intended for mixing waste water and dilution water in the reservoir 2. In this case the rotatable member 6 has cutting vanes such that it also functions as a cutting device for cutting large parts in the waste water. In an alternative embodiment the mixing device and the cutting device may be separate parts.

The system 1 is also provided with a turbidity sensor 8, which is intended for measuring turbidity of a mixture of waste water and dilution water in the reservoir 2. An ultrasonic generator 9 is provided to the system 1 in order to supply ultrasonic energy to the mixture of waste water and dilution water in the reservoir 2. The ultrasonic energy may further pulverise particles in the mixture of waste water and dilution water and/or cleaning surfaces inside the reservoir 2. A UVC radiator 10 is applied to the system for radiating the mixture of waste water and dilution water in the reservoir 2 so as to disinfect the mixture of waste water and dilution water. It is noted that an additional turbidity sensor (not shown) may be applied upstream of the influent entrance 3.

It is possible that adding dilution water is omitted, for example if the waste water has already been diluted sufficiently, which can be detected by the turbidity sensor. The water may be diluted sufficiently if the toilet has been flushed several times with water only, for example. It is also possible that other waste water is added to the waste water from the toilet, for example from a shower drain.

In the embodiment as shown in Fig. 1 the UVC radiator is elongated and extends vertically along the reservoir 2. It is mounted to an outer side of the surrounding wall of the reservoir 2. The UVC radiator 10 extends along a largest portion of the height of the reservoir 2. This provides efficient radiation of the passing mixture of waste water and dilution water under operating conditions. The efficiency appears to be increased further when the rotatable member 6 is adapted such that under operating conditions a funnel-shaped vortex arises in the reservoir 2. This can be achieved by the shape of the rotatable member 6 and/or its rotational speed, for example.

In order to monitor the disinfection process in the reservoir 2 the system 1 is provided with an optical spectrometer 11 for determining the concentration of certain compounds, for example Enterococci and E.coli, in the mixture of waste water and dilution water in the reservoir 2.

A treatment cycle of waste water may be started by filling the reservoir 2 with waste water from the toilet. Possible large parts in the waste water may be cut into smaller parts by the rotatable member 6. Dilution water is introduced into the reservoir 2 and mixed with the waste water by rotation of the rotatable member 6. Supplying dilution water may be continued until the turbidity has fallen below a predetermined threshold value. The resulting mixture of waste water and dilution water is exposed to ultrasonic energy from the ultrasonic generator 9 and UVC radiation from the UVC radiator 10 for treating the waste water, whereas the concentrations of certain compounds are monitored by the optical spectrometer 11. After the concentrations have fallen under a predetermined threshold the resulting mixture of dilution water and cleaned waste water, i.e. the effluent, is discharged from the reservoir 2 via the effluent output 5. The predetermined threshold of the concentrations as well as the predetermined threshold of turbidity can be derived through a calibration process. For example, by having sensors at opposite walls of the reservoir 2 the UVC radiation through the liquid is measured and the period of required irradiation time can be derived.

Fig. 1 shows a vacuum pump 12 which creates a pressure in the reservoir 2 below atmospheric pressure in order to enable waste water including large parts to be drawn into the reservoir 2, without using pumping means between the toilet discharge and the reservoir 2. Numerous alternative transport means are conceivable.

The system 1 is provided with a controller 13 for receiving signals from the turbidity sensor 8 and the optical spectrometer 11 and send signals to the electric motor 7, the ultrasonic generator 9, the UVC radiator 10 and the vacuum pump 12. Signal lines are indicated by broken lines in Fig. 1. The controller 13 may also control valves at the influent entrance 3, the dilution water entrance 4 and the effluent output 5.

The applicant has found that it is advantageous to operate the rotatable member 6, for example by operating it at high rotational speed, such that vapour bubbles arise in the mixture of waste water and dilution water, since the vapour bubbles improve transparency of the mixture which in turn improves efficiency of the UVC radiation. Additionally, implosion of the vapour bubbles improves pulverisation of particles in the waste water which in turn improves efficiency of the UVC radiation. Generation of vapour bubbles can be increased by lowering pressure in the reservoir 2 by means of the vacuum pump 12.

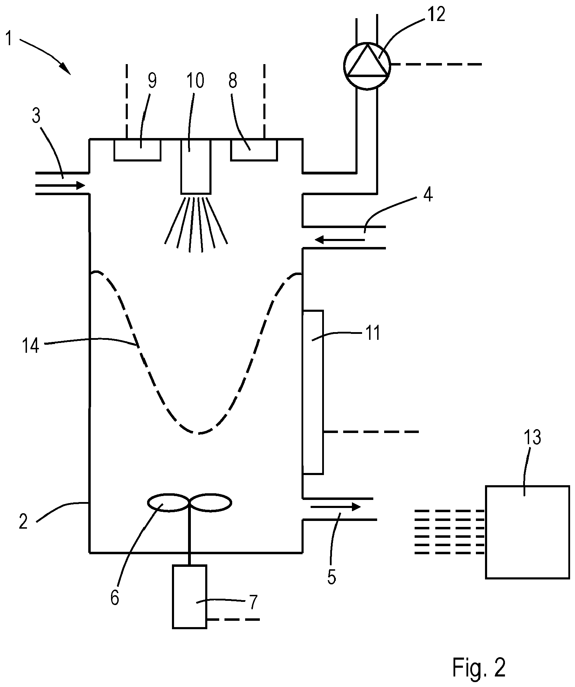

Fig. 2 shows an alternative embodiment of the system 1. Parts which are similar to the embodiment as shown in Fig. 1 have the same reference numbers. In this embodiment the rotatable member 6 is adapted such that under operating conditions a funnel-shaped vortex 14 arises in the mixture of waste water and dilution water. The vortex 14 is illustrated in Fig. 2 by a broken line in the reservoir 2. The UVC radiator 10 is located at an upper side of the reservoir 2 at an axis of rotation of the rotatable member 6 such that under operating conditions it radiates an inner side of the vortex. This appears to provide an efficient disinfection process because of the relatively large surface that is radiated. An additional advantage is that the UVC radiator 10 can be located such that it is substantially free from the mixture of waste water and dilution water in the reservoir 2, which minimizes contamination of the UVC radiator 10.

The invention is not limited to the embodiments shown in the drawings and described hereinbefore, which may be varied in different manners within the scope of the claims and the technical equivalents. For example, the dilution water may be introduced upstream of the reservoir or adding dilution water may be omitted. It is also conceivable to omit the ultrasonic generator and/or the optical spectrometer. Furthermore, the reactor may be a flow-through reactor through which waste water, and possibly dilution water, flow towards the effluent output continuously.

## Claims

1. A system (1) for treating waste water from a toilet, comprising a reactor (2) for receiving waste water from a toilet, an agitator for agitating waste water in the reactor (2), a turbidity sensor (8) for measuring turbidity of waste water in the reactor (2), a UVC radiator (10) for radiating waste water in the reactor (2) and a controller (13) for operating the UVC radiator in dependence of a signal received from the turbidity sensor (8), wherein the reactor (2) has an effluent output (5) for emptying the reactor (2).

2. A system (1) for treating waste water according to claim 1, wherein the system (1) is provided with a dilution water supply for supplying dilution water to the reactor (2).

3. A system (1) for treating waste water according to claim 2, wherein the reactor (2) has an influent entrance (3) for passing waste water from a toilet into the reactor (2) and a separate dilution water entrance (4) for passing dilution water from the dilution water supply into the reactor (2).

4. A system (1) for treating waste water according to any one of the preceding claims, wherein the system (1) is provided with an ultrasonic generator (9) for supplying ultrasonic energy to an inner side of the reactor (2).

5. A system (1) for treating waste water according to any one of the preceding claims, wherein the system (1) comprises a cutting device (6) for cutting large parts in the waste water.

6. A system (1) for treating waste water according to claim 5, wherein the cutting device (6) is located in the reactor (2).

7. A system (1) for treating waste water according to any one of the preceding claims, wherein the agitator (6) is located in the reactor (2).

8. A system (1) for treating waste water according to claim 7, wherein the agitator comprises a rotatable member (6) for generating a funnel-shaped vortex in a liquid in the reactor (2) under operating conditions.

9. A system (1) for treating waste water according to any one of the preceding claims and claim 5, wherein the cutting device and the agitator (6) are integrated.

10. A system (1) for treating waste water according to any one of the preceding claims, wherein the system (1) is provided with an optical spectrometer (11) for determining one or more specific compounds in a liquid in the reactor (2).

11. A system (1) for treating waste water according to any one of the preceding claims and claim 8, wherein the UVC radiator (10) is positioned such that it radiates an inner side of a resulting funnel-shaped vortex in a liquid in the reactor (2) when this arises under operating conditions.

12. A ship including a toilet having a toilet discharge for discharging waste water and a system (1) for treating the waste water according to any one of the preceding claims.

13. A method of operating the system (1) according to any one of the claims 1-11, wherein the reactor (2) is filled with waste water from a toilet, the agitator (6) is operated and turbidity is measured by the turbidity sensor (8), wherein the controller (13) operates the UVC radiator (10) in dependence of the measured turbidity, after which the reactor (2) is emptied through the effluent output (5).

14. A method of operating the system (1) according to claim 13, depending on claim 2, wherein dilution water is supplied to the reactor (2) until the turbidity has fallen below a predetermined threshold value.

15. A method of operating the system (1) according to claim 13 or 14, depending on claim 10, wherein the reactor (2) is emptied after the concentrations of the one or more specific compounds have fallen below a predetermined threshold.
